# EUROPÄISCHE PATENTSCHRIFT

(11) **EP 1 024 042 B1**
(45) Veröffentlichungstag und Bekanntmachung des Hinweises auf die Patenterteilung: **07.05.2003**
(21) Anmeldenummer: 99125467.3
(22) Anmeldetag: 21.12.1999
(51) Int. Cl.: B60J 7/12

(54) **Faltverdeck für ein Cabriolet-Fahrzeug**
Foldable top for convertible vehicle
Toit pliant pour véhicule convertible

(30) Priorität: 30.01.1999 DE 29901589 U
(43) Veröffentlichungstag der Anmeldung: 02.08.2000
(73) Patentinhaber: Wilhelm Karmann GmbH, D-49084 Osnabrück (DE)
(72) Erfinder: Maass, Joachim, 49143 Bissendorf (DE)
(74) Vertreter: Busse & Busse Patentanwälte

(56) Entgegenhaltungen:
- DE-U- 29 510 118
- DE-U- 29 513 595
- DE-U- 29 516 415
- US-A- 5 816 644

## Beschreibung

Die Erfindung bezieht sich auf ein Faltverdeck für ein Cabriolet-Fahrzeug in einer Ausbildung gemäß dem in US 5816644 offenbarten Oberbegriff des Anspruchs 1.

Die Erfindung befaßt sich mit dem Problem, ein Cabriolet-Fahrzeug mit einem Faltverdeck der Jerner gemäß DE 295 13 595.6 bekannten Art zu schaffen, dessen Verdeckkinematik mit geringem technischem Aufwand bei der Öffnungs- bzw. Schließbewegung des Verdecks eine verminderte Beeinträchtigung von Fahrzeuginsassen ermöglicht und dabei insgesamt einen verbesserten Bedienkomfort aufweist.

Die Erfindung löst diese Aufgabe durch ein Faltverdeck mit den Merkmalen des Anspruchs 1. Hinsichtlich wesentlicher weiterer Ausgestaltungsmerkmale wird auf die Ansprüche 2 bis 16 verwiesen.

Das erfindungsgemäße Faltverdeck Weist im heckseitigen Bereich seiner beiden randseitigen Klappgestänge-Baugruppen jeweils eine aus der an sich bekannten Hauptsäule und einer an dieser außenseitig angelenkten Spreizstrebe bestehende, zweiteilige Gestängegruppe als Verbindungseinheit zur Dachhaut auf. Diese Spreizstrebe ist längsrandseitig mit einem Bereich der Dachhaut so verbunden, daß eine von der Hauptsäule unabhängige Anbindung geschaffen ist und der heckseitige Bereich der Dachhaut auch unabhängig von der Bewegung der Hauptsäule gespannt bzw. entspannt werden kann. Die im heckseitigen Bereich in die Dachhhaut integrierte Heckscheibe kann mit dieser Verdeckkinematik über einen vergrößerten Verstellbereich so verlagert werden, daß die Stützbauteile in eine Hochstellung gelangen und dabei eine über dem Fondbereich des Fahrzeugs als Kopffreiheit wirksame Bahnkurve durchlaufen wird.

Bei der Öffnungs- bzw. Schließbewegung des Verdecks wirkt die Spreizstrebe mit einem den hinteren Randbereich der Dachhaut erfassenden Verdeckstoff-Spannbügel derart zusammen, daß eine weitgehend spannungsfreie und materialschonende Bewegung des Faltverdecks erreicht ist. Beim Öffnen des Faltverdecks werden der Verdeckspannbügel und die Spreizstrebe entgegen der Fahrtrichtung hochgeschwenkt, wobei der von beiden Bauteilen gehaltene Dachhaut-Heckbereich mit der integrierten Heckscheibe angehoben wird und durch die Bewegung der Spreizstrebe entgegen der Fahrtrichtung auch der vordere Randbereich der Heckscheibe die Hochstellung einnimmt.

Bei diesem Öffnungsvorgang des Faltverdecks bleibt ein im Fondbereich des Fahrzeug sitzender Passagier von der Bewegung der Heckscheibe unbeeinflußt, da deren vorderer Randbereich auf einer sich vom oberen Bereich des Innenraums bis hinter die Kopfstützen erstreckenden Bewegungsbahn geführt werden kann. Damit ist eine bisher als nachteilig empfundene Verlagerung von Verdeckteilen in das Gesichtsfeld des Insassen vermieden, gleichzeitig für große Personen im Fondbereich eine Gefährdung bei der Verdeckbewegung ausgeschlossen und mit dieser Verdeckkinematik der Bedienkomfort insgesamt verbessert.

Weitere Einzelheiten und vorteilhafte Wirkungen der Erfindung ergeben sich aus der nachfolgenden Beschreibung und der Zeichnung, in der ein Ausführungsbeispiel des Gegenstands der Erfindung näher veranschaulicht ist. In der Zeichnung zeigen:
- Fig.1: eine Seitenansicht des ohne Dachhaut dargestellten Faltverdecks in Schließstellung,
- Fig. 2: eine Seitenansicht ähnlich Fig. 1 in einer ersten Öffnungsphase bei Verstellung eines Verdeckstoff- Spannbügels und einer Spreizstrebe,
- Fig. 3: eine zweite Öffnungsphase bei Bewegung des Klappgestänges zu einem heckseitigen Verdeckkasten hin,
- Fig. 4: eine Seitenansicht mit im Verdeckkasten befindlichen Faltverdeck,

- Fig. 5: eine perspektivische Ausschnittsdarstellung des Klappgestänges im Bereich der Hauptsäule in Schließstellung,
- Fig. 6: eine Perspektivdarstellung ähnlich Fig. 5 während der Öffnungsphase gemäß Fig. 2 mit hochgeschwenktem Verdeckstoff-Spannbügel, und
- Fig. 7: eine Prinzipdarstellung einer zweiten Ausführung der Spreizstrebe mit direkt an dieser angelenktem Verdeckstoff-Spannbügel.

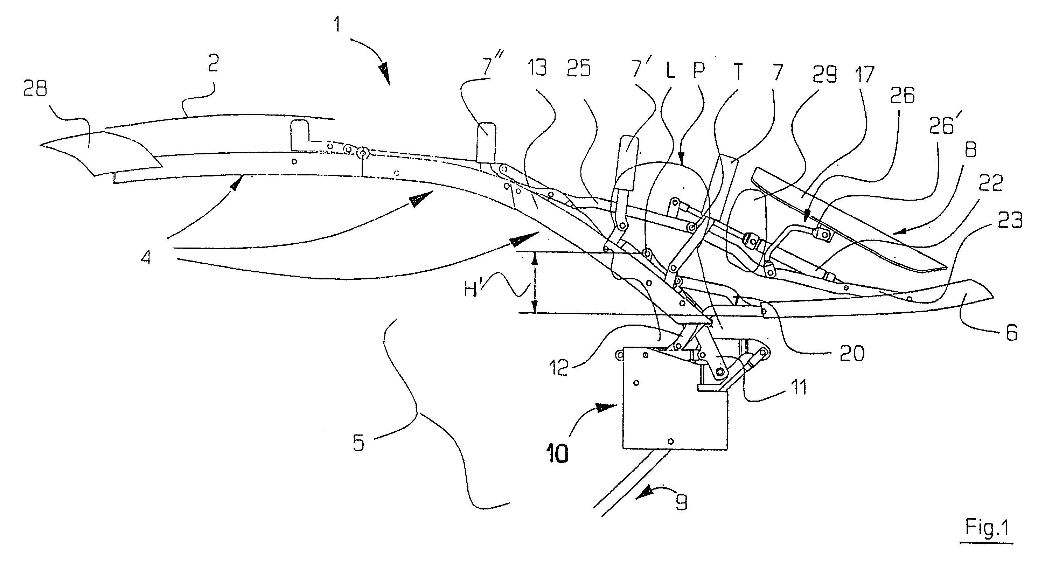

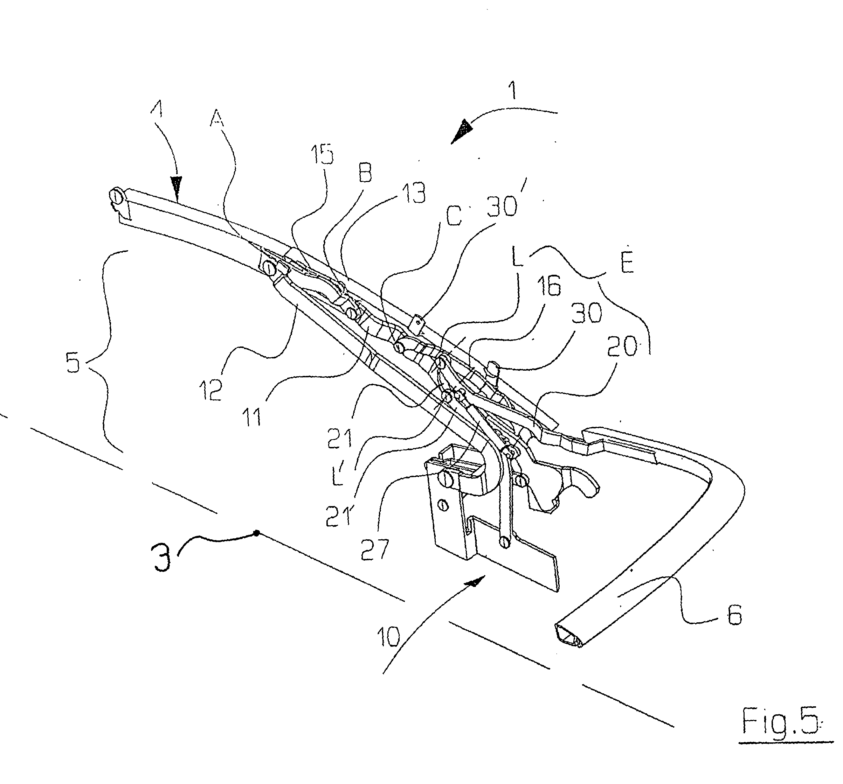

In Fig. 1 ist in einer teilweise geschnittenen Seitenansicht ein insgesamt mit 1 bezeichnetes Faltverdeck für ein nicht näher dargestelltes Cabriolet-Fahrzeug veranschaulicht, dessen Dachhaut 2 sich zwischen beidseits der Fahrzeuglängsmittelebene 3 (Fig. 5) symmetrisch gegenüberliegenden Gestängeschenkeln 4 einer jeweiligen in Schließstellung im Bereich des Windschutzscheibenrahmens (nicht dargestellt) festlegbaren Klappgestänge-Baugruppe 5 erstreckt. Die Dachhaut 3 ist im heckseitigen Bereich des Faltverdecks 1 zwischen einem Verdeckspannbügel 6 und einem hinteren Eckspriegel 7 mit einer vorzugsweise aus Festglas bestehenden Heckscheibe 8 versehen.

Die beiden Klappgestänge-Baugruppen 5 (von denen in den Zeichnungen nur jeweils eine dargestellt bzw. nachfolgend beschrieben ist) weisen bei einer bekannten Verdeckkinematik zum Fahrzeugheckbereich hin, jeweils eine mit einem Antriebsorgan 9 verbundene und karosserieseitig in einem Hauptschwenklager 10 abgestützte Hauptsäule 11 auf, in deren Nahbereich zur Fahrzeuglängs-Mittelebene 3 hin ein synchron mit der Hauptsäule 11 schwenkbare innere Führungsstange 12 vorgesehen ist (Fig. 5).

Die erfindungsgemäß ausgebildete Verdeckkinematik weist eine Hauptsäule 11 auf, die mit einer außenseitig an dieser angelengten Spreizstrebe 13 versehen ist, an der längsrandseitig zumindest bereichsweise die Dachhaut 2 angreift (nicht dargestellt). Die Seitenansicht gemäß Fig. 1 verdeutlicht, daß die Spreizstrebe 13 in der Schließstellung des Faltverdecks 1 außenseitig vor der Hauptsäule 11 eine Abdeckstellung mit im wesentlichen paralleler Ausrichtung zur Hauptsäule 11 einnimmt.

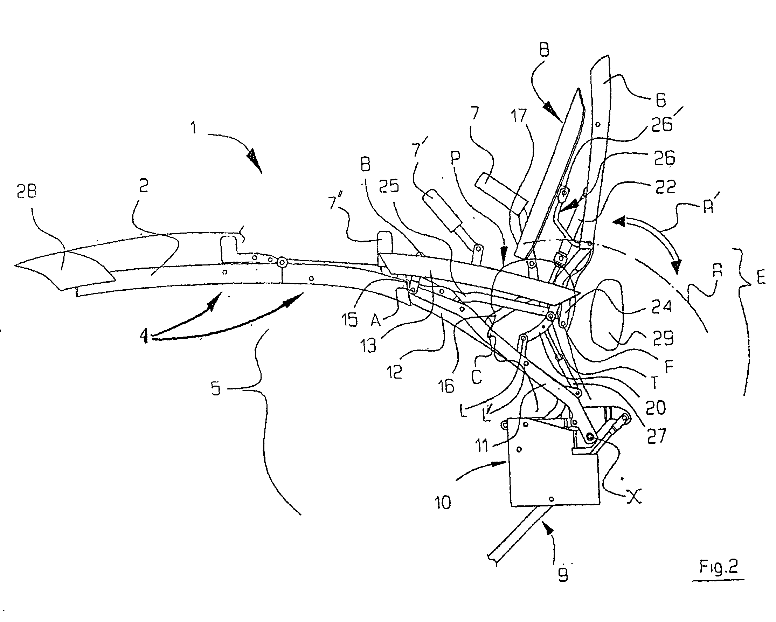

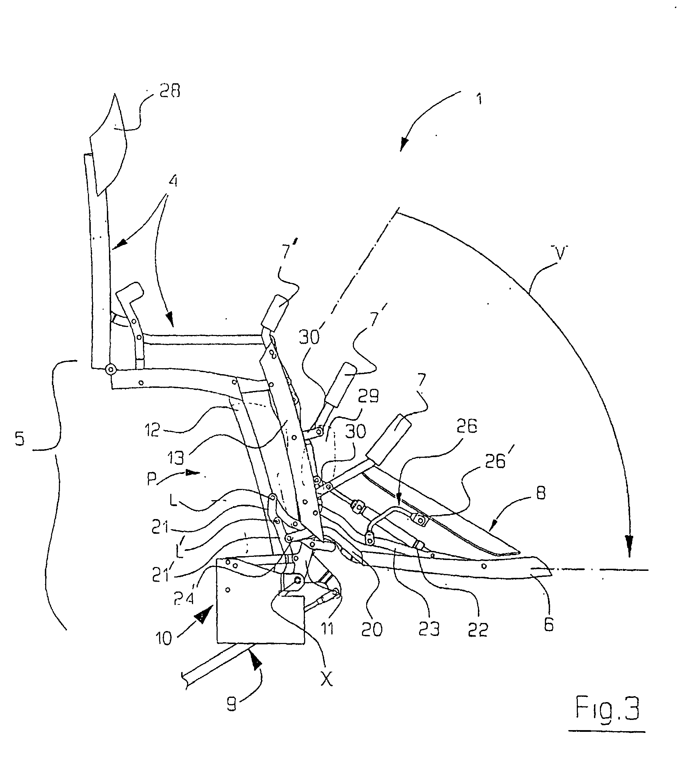

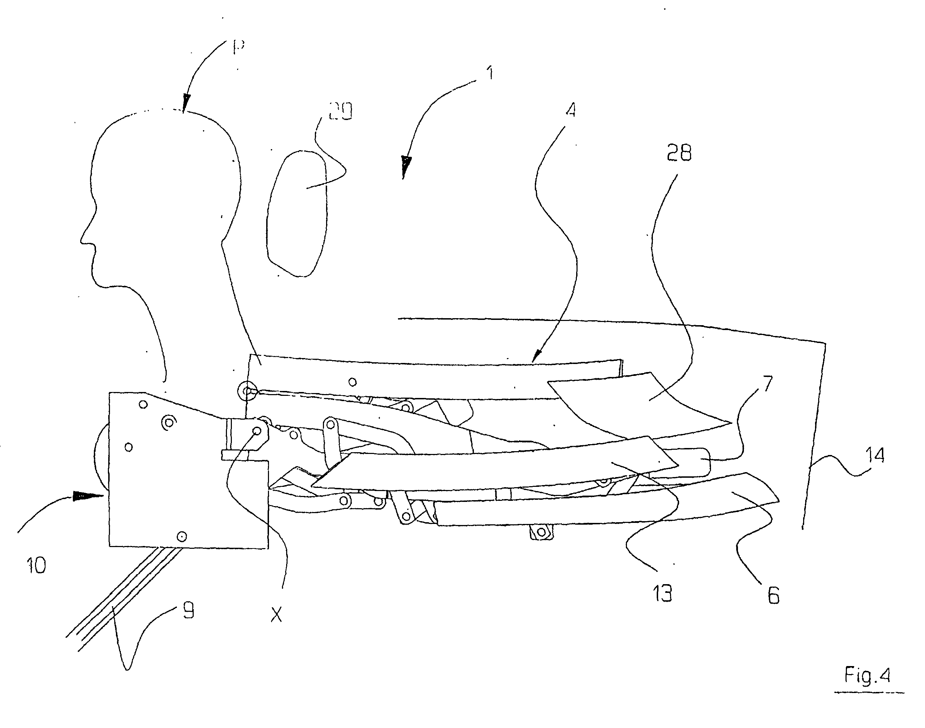

Die Zusammenschau von Fig. 1 und Fig. 2 verdeutlicht den Bewegungsablauf in einer ersten Phase bei der Öffnungsbewegung des Klappgestänges 5, wobei die Spreizstrebe 13 in dieser Bewegungsphase unabhängig von der Hauptsäule 11 geschwenkt ist und entgegen der Fahrtrichtung in die dargestellte Spreizstellung (Fig. 2) verlagert wird. Bei Fortführung der Öffnungsbewegung des Faltverdecks 1 (Fig. 3, Fig. 4) wird die Spreizstrebe 13 aus ihrer Spreizstellung in die parallele Abdeckstellung außenseitig vor die Hauptsäule 11 zurückgeführt (Fig. 3) und danach werden die Spreizstrebe 13 und die Hauptsäule 11 bei gleichzeitiger Schwenkbewegung mit den Teilen des Klappgestänges 5 in den Verdeckkasten 14 des Fahrzeugs eingeklappt (Fig. 4).

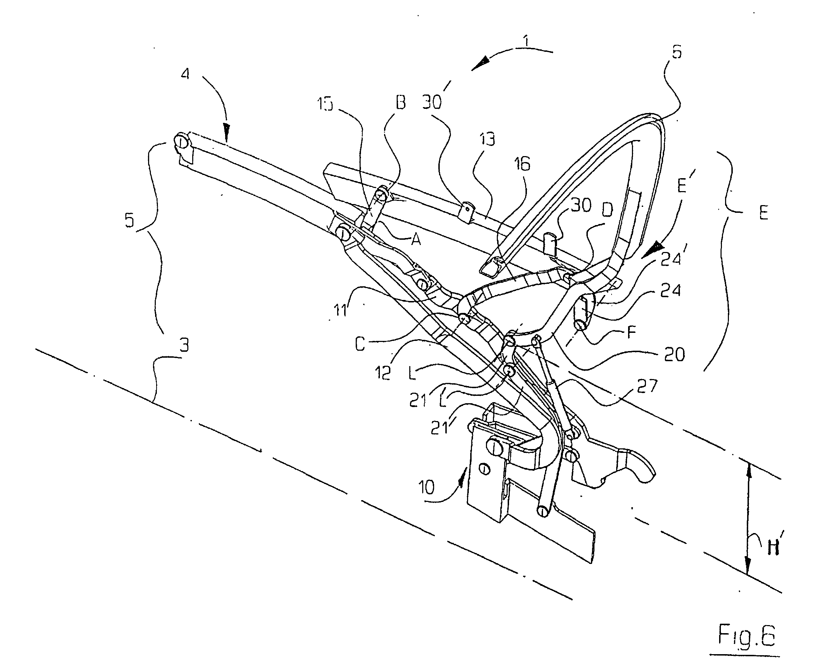

In der Bewegungsphase gemäß Fig. 2 ist die Spreizstrebe 13 in ihrer Spreizstellung über jeweilige zur Hauptsäule 11 gerichtete Verbindungsglieder gehalten, die als eine Möglichkeit der Einbindung der Spreizstrebe 13 in die Verdeckkinematik in einer perspektivischen Heckansicht gemäß Fig. 6 näher dargestellt sind. Dabei wird deutlich, daß zwischen der Hauptsäule 11 und der Spreizstrebe 13 ein mit einem vorderen Gelenkhebel 15 und einem hinteren Gelenkhebel 16 versehene Anlenkung vorgesehen ist, die insgesamt eine Viergelenkkette A, B, C, D nach Art einer Parallelogramm-Steuerung bildet.

Die vorbeschriebene Ausführung der Klappgestänge-Baugruppe 5 mit der Hauptsäule 11 und der Spreizstrebe 13 als Verbindungseinheit zur Dachhaut 2 ermöglicht deren bereichsweise vertikale Verlagerung, derart, daß die Heckscheibe 8 und der diese einfassende hintere Bereich der Dachhaut 2 auf einer erhöhten Bewegungsbahn R über einem Passagier P bewegt werden können. Diese Bewegungsphase ist in Fig. 2 verdeutlicht. Die im wesentlichen maßstabsgerechte Darstellung zeigt mit der Bewegungsbahn R (Strich-Punkt-Linie) und dem Bewegungspfeil R' die möglichen Schwenkpositionen der Heckscheibe 8 beim Öffnungsvorgang, während mittels der erfindungsgemäßen Verdeckkinematik mit der Spreizstrebe 13 der vordere Scheibenrand 17 der Heckscheibe 8 nicht mehr bis nach vorn in das Gesichtsfeld des Passagiers P verlagert wird, und dieser auch während dem gesamten Öffnungs-bzw. Schließzyklus (Fig. 1 bis Fig. 4) unbeeinflußt von der Bewegung des Verdecks 1 im Fahrzeug verbleiben kann.

Für eine zwangsgesteuerte Bewegung der Spreizstrebe 13 mittels der Verdeckkinematik ist die Spreizstrebe 13 im Bereich der Anlenkungsteile 15, 16 so in das Klappgestänge 5 integriert, daß eine im Bereich des Haupt-Antriebsorgans 9 erzeugte Stellbewegung des Faltverdecks 1 über konstruktiv auswählbare Verbindungsbauteile, beispielsweise über einen der Gestängeschenkel 4, einen der Eckspriegel 7 und/oder den heckseitigen Verdeckspannbügel 6, auf die Spreizstrebe 13 übertragen werden kann.

In bevorzugter Ausführung ist eine zwangssteuerung der Spreizstrebe 13 mittels des an dieser angreifenden Verdeckspannbügels 6 vorgesehen. Ebenso ist denkbar, daß die Spreizstrebe 13 zur Verlagerung in die vorbeschriebene Entspannungsstellung der Dachhaut 2 (Fig. 2) mit einem separaten Antriebsorgan (nicht dargestellt) versehen ist.

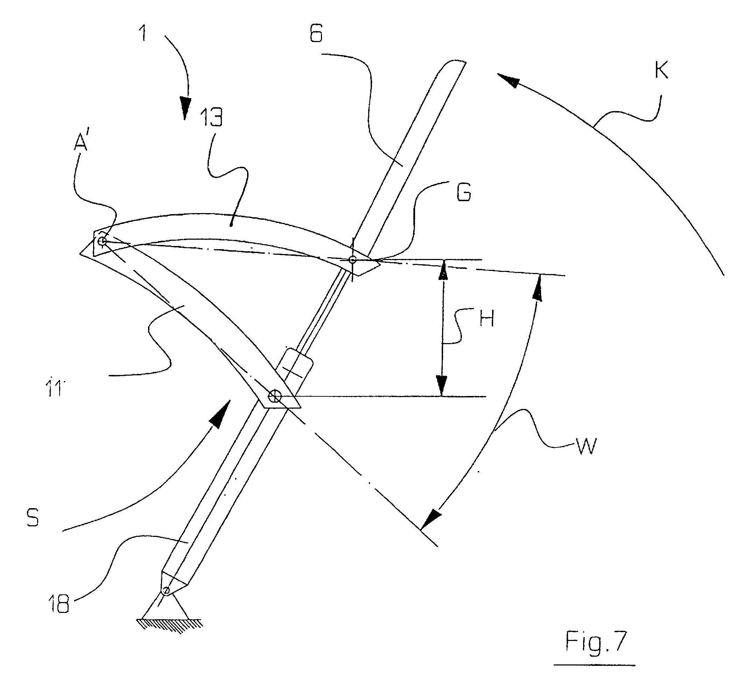

In Fig. 7 ist in einer Prinzipdarstellung eine konstruktiv einfache Ausführung der Verdeckkinematik mit der Spreizstrebe 13 und dem Verdeckspannbügel 6 dargestellt. Der Verdeckspannbügel 6 greift an einer insgesamt mit S bezeichneten Schwenk-Hub-Baugruppe in einem Schwenkgelenk G an, das gemeinsam mit dem Verdeckspannbügel 6 in eine einen vertikalen Abstand H zum Hauptschwenklager 10 (bzw. zur nicht dargestellten Karosseriebrüstung) aufweisende Hochstellung verlagerbar ist. Der Verdeckspannbügel 6 wird während der Höhenverlagerung (Abstand H) entgegen der Fahrtrichtung hochgeschwenkt (Pfeil K), wobei der Verdeckspannbügel 6 im Bereich der Schwenk-Hub-Baugruppe S mit einem von einem Hydraulikzylinder 18 gebildeten Huborgan zusammenwirkt.

Das Schwenkgelenk G ist dabei als endseitige Verbindung zwischen dem Verdeckspannbügel 6 und der Spreizstrebe 13 vorgesehen, so daß diese in der ersten Öffnungsphase des Faltverdecks 1 zwangsgesteuert unter Schwenkung um das als fester Drehpunkt dargestellte Gelenk A' (in Fig. 6 als beweglicher Schenkel 15 mit Gelenkpunkten A und B ausgeführt) in die einen Winkel W definierende Spreizstellung zur Hauptsäule 11 verlagert wird. Über eine entsprechende Bemessung des Abstands H mittels einer fahrzeugspezifischen Dimensionierung der Teile der Schwenk-Hub-Baugruppe S kann diese unterschiedliche Anforderungen an die Bewegungsbahn der Heckscheibe 8 und/oder die geforderte Kopffreiheit über dem Fahrgastraum erfüllen.

In der detaillierter dargestellten Ausführungsform des Faltverdecks 1 mit der Spreizstrebe 13 gemäß Fig. 1 bis 6 ist diese an ihrem rückseitigen Ende über eine mehrgliedrige Gelenkkette E mit dem den heckseitigen Bereich der Dachhaut 2 erfassenden Verdeckspannbügel 6 (Fig. 5, Fig. 6) verbunden. Der Verdeckspannbügel 6 weist dabei einen abgewinkelt und in Schließstellung (Fig. 1) nach oben gerichteten Stützschenkel 20 auf, der zum Hauptlager 10 hin im Bereich der Hauptsäule 11 mit einer Schwingstrebe 21 jeweilige Gelenkpunkte L, L' bildet und karosserieseitig über eine Stützstrebe 21' angelenkt ist (Fig. 6).

Damit weist der Verdeckspannbügel 6 im Gelenkpunkt L einen im Abstand H' über der Karosseriebrüstung liegenden Drehpunkt auf, mit dem eine dem Abstand H gemäß Fig. 7 bei der Öffnungsbewegung entsprechende Höhenverlagerung als festes Maß in der Konstruktion enthalten ist, wobei für die Verlagerung des Verdeckspannbügels 6 in die aufgeschwenkte Position dessen Anlenkpunkt L in seiner Höhenlage in der Karosserie so angeordnet ist, daß ein über der Karosseriebrüstung befindlicher Abstützungsbereich erreicht ist und sich mit diesem zwangsläufig die erhöhte Bewegungsbahn R ergibt.

Beim Hochschwenken (bzw. Absenken) des Verdeckspannbügels 6 ist gleichzeitig die Zwangssteuerung im Bereich E' der Verbindung von Verdeckspannbügel 6 und Spreizstrebe 13 wirksam (Fig. 6), so daß diese beiden Bauteile gemeinsam die eine Entspannung der Dachhaut 2 im Bereich der Eckspriegel 7, 7', 7'' bewirkende Hochstellung (Fig. 2) einnehmen. Die Verbindung E' zwischen dem Verdeckspannbügel 6 und der Spreizstrebe 13 ist von zwei Führungsstangen 24 und 24' gebildet, die über ein Gelenk F verbunden sind. Die Führungsstange 24' greift dabei an der Spreizstrebe 13 an, wobei insbesondere eine drehfeste Verbindung vorgesehen ist.

In zweckmäßiger Ausführung ist für die Verlagerung des Verdeckspannbügels 6 in die Öffnungsstellung ein Anriebsorgan 22 in Form eines Hydraulikzylinders vorgesehen, der unabhängig vom Hauptantrieb 9 wirksam ist. Ebenso ist denkbar, mit dem Haupt-Antriebsorgan 9 ein zum Verdeckspannbügel 6 hin verlaufendes Antriebsgestänge vorzusehen (nicht dargestellt), das jedoch im Bereich des Hauptschwenklagers 10 einen zusätzlichen Bewegungsfreiraum erfordert.

Die Dachhaut 2 weist in ihrem heckseitigen Bereich zwischen dem Eckspriegel 7 und dem Verdeckspannbügel 6 die Heckscheibe 8 auf, die bei der Öffnungs- bzw. Schließbewegung des Faltverdecks 1 auf der von der Spreizstrebe 13 und der jeweiligen Schwenkbaugruppe (S in Fig. 7; E in Fig. 6) des Verdeckspannbügels 6 definierten Bahnkurve R so geführt ist, daß der Innenraum des Fahrzeugs mit dem Passagier P weitgehend unbeeinflußt ist.

Am Verdeckspannbügel 6 ist eine an sich bekannte und die Dachhaut 2 in Schließstellung straffende Spanneinheit mit einer hinteren Spannstrebe 23 und einer vorderen Spannstrebe 25 vorgesehen, die ihrerseits mit der Klappgestänge-Baugruppe 5 verbunden ist. Diese beiden Spannstreben 23 und 25 sind aus der in Fig. 1 dargestellten Totpunkt-Stellung mittels des Antriebszylinders 22 dann verlagerbar, wenn dieser zur Bewegung des Verdeckspannbügels 6 die vorbeschriebene Öffnungsbewegung ausführt. Dabei erfolgt eine Schwenkbewegung um das zwischen den Spannstreben 23 und 25 vorgesehene Gelenk T.

An die hintere Spannstrebe 23 ist die Heckscheibe 8 über einen Winkelhebel 26 so angelenkt, daß die Heckscheibe 8 zwangsgeführt mit der Bewegung der Spannstrebe 23 in die in Fig. 2 dargestellte Hochstellung gelangt und hier über den Winkelteil 26' eine stabile Abstützung der im wesentlichen senkrecht ausgerichteten Heckscheibe 8 erreicht ist.

In zweckmäßiger Ausführung weist die Verdeckkinematik im Bereich der Spreizstrebe 13 bzw. des Verdeckspannbügels 6 eine am Hauptschwenklager 10 abgestützte Gasdruckfeder 27 auf, so daß die heckseitigen Bauteile des Klappgestänges 5 in der Öffnungsstellung (Fig. 2) gegen eine ungewollte Abwärtsbewegung gesichert sind, der Verdeckkastendeckel (nicht dargestellt) ungehindert geöffnet werden kann und danach die Verlagerung des Faltverdecks 2 in die Ablagestellung (Fig. 4) im Verdeckkasten 14 möglich ist.

Beim Öffnen des Faltverdecks 2 aus der Schließstellung gemäß Fig. 1 wird zuerst der Bereich der Verdeckspitze 28 von dem nicht dargestellten Windschutzscheibenrahmen entriegelt und danach stellt sich der Verdeckstoff-Spannbügel 6 bis in die nahezu senkrechte Stellung (Fig. 2) über den Bereich der Kopfstütze 29 auf, wobei eine Schwenkbewegung um den Drehpunkt L erfolgt. Gleichzeitig wird durch Überwindung der Totpunkt-Stellung der beiden Spannstreben 23 und 25 die Verdeckspitze 28 angehoben. Die Heckscheibe 8 wird über die vorbeschriebene und dargestellte Verdeckkinematik in eine zur Ebene des Verdeckstoff-Spannbügels 6 im wesentlichen parallele Lage verbracht und dieser befindet sich hinter dem Kopfbereich eines Fondpassagiers P.

Die Spreizstrebe 13 wird bei diesem Bewegungsablauf über ihre Anbindungsteile zum Verdeckstoff-Spannbügel 6 zwangsgesteuert angehoben und dadurch wird der heckseitige Verdeckstoff (nicht dargestellt) der Dachhaut 2 mittels der Spreizstrebe so nachgeführt, daß keine zusätzlichen Spannungen in der Dachhaut 2 auftreten. Die im Bereich jeweiliger Verbindungsansätze 30, 30' (Fig. 6) an der Spreizstrebe 13 angelenkten Eckspriegel 7, 7' bzw. 7" folgen der vorbeschriebenen Bewegung ebenfalls, wobei eine Entlastung der Dachhaut 2 erfolgt.

Nach Erreichen der Öffnungstellung gemäß Fig. 2 wird nunmehr der nicht näher dargestellte Deckel über dem Verdeckkasten 14 (Fig. 4) geöffnet und es erfolgt eine Absenkung des Verdeckstoff-Spannbügels 6 (Pfeil V in Fig. 3) in Richtung zum Verdeckkasten 14 hin, wobei die Spreizstrebe 13 wieder in ihre Überdeckungsstellung zur Hauptsäule 11 gebracht wird. Bei Fortführung dieser Ablegebewegung des Faltverdecks 1 schwenken die Hauptsäule 11 und die Spreizstrebe 13 nunmehr gemeinsam um den Verbindungspunkt X am Hauptlager 10 bis in die Ablagestellung im Verdeckkasten 14 (Fig. 4), und der Verdeckkastendeckel kann automatisch geschlossen werden.

Bei der Rückführung des Faltverdecks 1 in die Schließstellung (Fig. 1) erfolgt der vorbeschriebenen Bewegungsablauf in umgekehrter Reihenfolge, wobei die Spreizstellung von Hauptsäule 11 und Spreizstrebe 13 auch bei diesem Bewegungsablauf nur in der Hochstellungs-Lage des Verdeckstoff-Spannbügels 6 vorgesehen ist.

## Patentansprüche

1. Faltverdeck für ein Cabriolet-Fahrzeug, dessen eine Heckscheibe (8), einen heckseitigen Verdeckspannbügel (6) und zumindest einen Eckspriegel (7) aufweisende Dachhaut (2) längsrandseitig zwischen zwei spielgelbildlich zur Fahrzeuglängsmittelebene (3) verlaufenden, mehrgliedrigen Klappgestänge-Baugruppen (5) aufgenommen ist, die zum Fahrzeugheckbereich hin jeweils eine mit einem Haupt-Antriebsorgan (9) verbundene und karosserieseitig in einem Hauptschwenklager (10) abgestützte Hauptsäule (11) aufweisen, und in deren Nahbereich zur Fahrzeuglängsmittelebene (3) hin jeweils eine synchron mit der Hauptsäule (11) schwenkbare innere Führungsstange (12) vorgesehen ist, **dadurch gekennzeichnet, daß** an der Hauptsäule (11) eine äußere Spreizstrebe (13) angelenkt und diese längsrandseitig zumindest bereichsweise mit der Dachhaut (2) verbunden ist, derart, daß die Spreizstrebe (13) in der Schließstellung des Faltverdecks (1) außenseitig vor der Hauptsäule (11) eine Abdeckstellung einnimmt.

2. Faltverdeck nach Anspruch 1, **dadurch gekennzeichnet, daß** die Spreizstrebe (13) eine Abdeckstellung mit im wesentlichen paralleler Ausrichtung zur Hauptsäule (11) aufweist.

3. Faltverdeck nach Anspruch 1 oder 2, **dadurch gekennzeichnet, daß** die Spreizstrebe (13) bei der Öffnungsbewegung der Klappgestänge-Baugrappe (5) zumindest phasenweise unabhängig von der Hauptsäule (11) verstellbar, dabei entgegen der Fahrtrichtung in eine Spreizstellung (Winkel W) hochschwenkbar und aus dieser in die parallele Abdeckstellung außenseitig vor der Hauptsäule (11) rückführbar ist.

4. Faltverdeck nach einem der Ansprüche 1 bis 3, **dadurch gekennzeichnet, daß** die Spreizstrebe (13) und die Hauptsäule (11) gleichzeitig verschwenkbar sind.

5. Faltverdeck nach einem der Ansprüche 1 bis 4, **dadurch gekennzeichnet, daß** zwischen der Hauptsäule (11) und der Spreizstrebe (13) eine mit einem vorderen (15) und einem hinteren Gelenkhebel (16) eine Viergelenkkette (A, B, C, D) bildende Anlenkung vorgesehen ist.

6. Faltverdeck nach einem der Ansprüche 1 bis 5, **dadurch gekennzeichnet, daß** die Spreizstrebe (13) über eine Verbindung zur Klappgestänge-Baugruppe (5), zum Eckspriegel (7) und/oder zum Verdeckspannbügel (6) zwangsgesteuert ist.

7. Faltverdeck nach einem der Ansprüche 1 bis 5, **dadurch gekennzeichnet, daß** die Spreizstrebe (13) mit einem separaten Antriebsorgan versehen ist.

8. Faltverdeck nach einem der Ansprüche 1 bis 7, **dadurch gekennzeichnet, daß** der mit der Spreizstrebe (13) zusammenwirkende Verdeckspannbügel (6) an einer karosserieseitig abgestützten Schwenk-Hub-Baugruppe (S; E) in einem Schwenkgelenk (G; L, L') angreift, das einen vertikalen Abstand (H, H') zum Hauptschwenklager (10) aufweisst.

9. Faltverdeck nach einem der Ansprüche 1 bis 8, **dadurch gekennzeichnet, daß** die Spreizstrebe (13) und der Verdeckspannbügel (6) im Bereich der Schwenk-Hub-Baugruppe (S) mit einem Huborgan (18) zusammenwirken.

10. Faltverdeck nach einem der Ansprüche 1 bis 9, **dadurch gekennzeichnet, daß** der Verdeckspannbügel (6) im Bereich der Schwenk-Hub-Baugruppe (S; E) mit der Spreizstrebe (13) verbunden ist.

11. Faltverdeck nach einem der Ansprüche 1 bis 10, **dadurch gekennzeichnet, daß** die Spreizstrebe (13) an ihrem rückseitigen Ende über eine Gelenkkette (E') mit dem den heckseitigen Bereich der Dachhaut (2) erfassenden Verdeckspannbügel (6) verbunden ist, und an diesem ein abgewinkelter Stützschenkel (20) mit zumindest einer Schwingstrebe (21, 21') vorgesehen ist.

12. Faltverdeck nach einem der Ansprüche 8 bis 11, **dadurch gekennzeichnet, daß** die Dachhaut (2), in ihrem heckseitigen Bereich zwischen dem Eckspiegel (7) und dem Verdeckspannbügel (6), die Heckscheibe (8) aufweist, und diese bei der Öffnungs- bzw. Schließbewegung des Faltverdecks (2) auf einer von der Spreizstrebe (13) und der Schwenk-Hub-Baugruppe (S; E) des Verdeckspannbügels (6) definierten Bahnkurve (R) geführt ist.

13. Faltverdeck nach einem der Ansprüche 11 oder 12, **dadurch gekennzeichnet, daß** der Verdeckspannbügel (6) im Abstand zu seinem Stützschenkel (20) zumindest zwei in Fahrzeuglängsrichtung verlaufende Spannstreben (23, 25) aufweist, wobei die in Schließstellung vordere Spannstrebe (25) mit der Klappgestänge-Baugruppe (5) verbunden ist.

14. Faltverdeck nach Anspruch 13, **dadurch gekennzeichnet, daß** die Heckscheibe (8) an der hinteren der beiden Spannstreben (23) über einen Winkelhebel (26) angelenkt ist.

15. Faltverdeck nach einem der Ansprüche 13 oder 14, **dadurch gekennzeichnet, daß** zwischen den beiden Spannstreben (23, 25) ein vom Haupt-Antriebsorgan (9) unabhängiger Hydraulikzylinder als Antriebsorgan (22) vorgesehen ist.

16. Faltverdeck nach einem der Ansprüche 1 bis 14, **dadurch gekennzeichnet, daß** die Spreizstrebe (13) und/oder der Verdeckspannbügel (6) über eine Gasdruckfeder (27) am Hauptschwenklager (10) abgestützt ist/sind.

## Claims

1. Foldable top for a convertible vehicle, of which a roof skin (2), exhibiting a rear window (8), a rear cover tensioning bar (6) for the foldable top, and at least one comer cross-member (7), is accommodated on the longitudinal edge side between two multi-member folding-bar modules (5) running in a mirror image arrangement to the longitudinal mid-plane (3) of the vehicle, which exhibit in each case, extending towards the rear area of the vehicle, a main column (11) connected to a main drive element (9) and supported on the bodywork side in a main pivot bearing (10), and in the vicinity of which, extending towards the longitudinal mid-plane (3) of the vehicle, in each case an inner guide bar (12) is provided, capable of pivoting in synchrony with the main column (11), **characterised in that** an outer spreader strut (13) is attached by a joint to the main column (11), and is connected on the longitudinal edge side at least in some areas to the roof skin (2), in such a way that the spreader strut (13), in the closed position of the foldable top (1), adopts a cover position on the outside in front of the main column (11).

2. Foldable top according to Claim 1, **characterised in that** the spreader strut (13) exhibits a cover position with alignment essentially parallel to the main column (11).

3. Foldable top according to claim 1 or 2, **characterised in that** the spreader strut (13), during the opening movement of the folding-bar module (5), is capable of adjustment at least in phases, independently of the main column (11), in this situation is capable of being pivoted upwards against the direction of travel into a spread position (angle W), and can be retracted from this into the parallel cover position on the outside in front of the main column (11).

4. Foldable top according to one of claims 1 to 3, **characterised in that** the spreader strut (13) and the main column (11) are capable of being pivoted simultaneously.

5. Foldable top according to one of claims 1 to 4, **characterised in that** a joint is provided for between the main column (11) and the spreader strut (13), forming a four-element chain (A, B, C, D) with a front joint lever (15) and a rear joint lever (16).

6. Foldable top according to one of claims 1 to 5, **characterised in that** the spreader strut (13) is force-controlled via a connection to the folding-bar module (5), to the comer cross-member (7), and/or to the top cover tensioning bar (6).

7. Foldable top according to one of claims 1 to 5, **characterised in that** the spreader strut (13) is provided with a separate drive element.

8. Foldable top according to one of claims 1 to 7, **characterised in that** the top cover tensioning bar (6) interacting with the spreader strut (13) engages in a pivot joint (G; L, L') at a pivot raising module (S; E) supported on the bodywork side, said joint exhibiting a vertical distance (H, H') from the main pivot bearing (10).

9. Foldable top according to one of claims 1 to 8, **characterised in that** the top cover tensioning bar (6) interacts in the area of the pivot raising module (S) with a lifting element (18).

10. Foldable top according to one of claims 1 to 9, **characterised in that** the top cover tensioning bar (6) is connected in the area of the pivot raising module (S; E) with the spreader strut (13).

11. Foldable top according to one of claims 1 to 10, **characterised in that** the spreader strut (13) is connected at its rear end by means of a jointed chain (E') to the top cover tensioning bar (6) relating to the rear area of the roof skin (2), and that an angled support limb (20) is provided at said bar, with at least one vibration strut (21, 21').

12. Foldable top according to one of claims 8 to 11, **characterised in that** the roof skin (2) exhibits, in its area to the rear of the vehicle between the comer mirror (7) and the top cover tensioning bar (6), the rear window (8), and that this window, during the opening and closing movement of the foldable top (2), is guided on a trajectory (R) defined by the spreader strut (13) and the pivot raising module (S; E) of the top cover tensioning bar (6).

13. Foldable top according to one of claims 11 or 12, **characterised in that** the top cover tensioning bar (6) exhibits, at a distance from its support limb (20), at least two tensioning struts (23, 25) running in the longitudinal direction of travel of the vehicle, whereby the tensioning strut (25) which is at the front in the closed position is connected to the folding-bar module (5).

14. Foldable top according to claim 13, **characterised in that** the rear window (8) is joint-connected by means of an angle lever (26) to the rearmost of the two tensioning struts (23).

15. Foldable top according to one of claims 13 or 14, **characterised in that** a hydraulic cylinder as a drive element (22), independent of the main drive element (9), is provided between the two tensioning struts (23, 25).

16. Foldable top according to one of claims 1 to 14, **characterised in that** the spreader strut (13) and/or the top cover tensioning bar (6) is/are supported by means of a gas pressure spring (27) on the main pivot bearing (10).

## Revendications

1. Toit pliant pour un véhicule convertible avec une peau de toit (2), une vitre arrière (8), un étrier arrière de tension de capote (6) et au mois un arceau d'angle (7), montée par ses bords entre deux groupes de tringlerie rabattables (5) à plusieurs éléments, symétriques par rapport au plan longitudinal médian (3) du véhicule, présentant chacun une colonne principale (11) reliée à un organe principal d'entraînement (9) et s'appuyant du côté de la carrosserie sur un palier principal de basculement (10), avec, pour chaque groupe, près du plan longitudinal médian (3) du véhicule, une tringle interne de guidage (12) pouvant basculer en synchronisme avec la colonne principale (11),
**caractérisé en ce qu'**
à la colonne principale (11), est articulée une barre d'écartement (13) qui est reliée du côté du bord longitudinal, au moins localement à la peau du toit (2) de manière que la barre d'écartement (13), quand la capote pliante (1) est fermée, occupe une position de couverture située vers l'extérieur, devant la colonne principale (11).

2. Toit pliant selon la revendication 1,
**caractérisé en ce que**
la barre d'écartement (13) présente une position de couverture éventuellement dirigée parallèlement à la colonne principale (11).

3. Toit pliant selon l'une quelconque des revendications 1 ou 2,
**caractérisé en ce que**
la barre d'écartement (13), lors de l'ouverture du groupe de tringlerie rabattable (5), peut se déplacer, au moins par phases, indépendamment de la colonne principale (11), pour se relever par basculement dans le sens opposé à la marche du véhicule et venir occuper une position d'écartement (angle W) et à partir de celle-ci peut revenir à la position parallèle de couverture, vers l'extérieur devant la colonne principale (11).

4. Toit pliant selon l'une quelconque des revendications 1 à 3,
**caractérisé en ce que**
la barre d'écartement (13) et la colonne principale (11) peuvent basculer en même temps.

5. Toit pliant selon l'une quelconque des revendications 1 à 4,
**caractérisé en ce qu'**
il est prévu, entre la colonne principale (11) et la barre d'écartement (13), une articulation formant avec un levier articulé avant (15) et un levier articulé arrière (16), une chaîne à quatre articulations (A, B, C, D).

6. Toit pliant selon l'une quelconque des revendications 1 à 5,
**caractérisé en ce que**
la barre d'écartement (13) est guidée impérativement par l'intermédiaire d'une liaison avec le groupe de tringlerie rabattable (15), l'arceau d'angle (7) et/ou l'étrier de tension de capote (6).

7. Toit pliant selon l'une quelconque des revendications 1 à 5,
**caractérisé en ce que**
la barre d'écartement (13) est équipée d'un organe d'entraînement séparé.

8. Toit pliant selon l'une quelconque des revendications 1 à 7,
**caractérisé en ce que**
l'étrier de tension de capote (6) coopérant avec la barre d'écartement (13) est en prise avec le groupe de basculement et de levage en appui du côté de la carrosserie, par une articulation de basculement (G, L, L') qui est à une distance verticale (H, H') du palier principal de basculement (10).

9. Toit pliant selon l'une quelconque des revendications 1 à 8,
**caractérisé en ce que**
la barre d'écartement (13) et l'étrier de tension de capote (6) coopèrent avec un organe de levage (18) dans la zone du groupe de basculement et de levage (S).

10. Toit pliant selon l'une quelconque des revendications 1 à 9,
**caractérisé en ce que**
l'étrier de tension de capote (6) est relié à la barre d'écartement (13) dans la zone de groupe de basculement et de levage (S ; E).

11. Toit pliant selon l'une quelconque des revendications 1 à 10,
**caractérisé en ce que**
la barre d'écartement (13) a son extrémité arrière reliée par une chaîne d'articulations (E') à l'étrier de tension de capote (6) enserrant la zone arrière de la peau de toit (2), et il est prévu sur cet étrier une branche de soutien (20) coudée avec au moins une barre oscillante (21, 21').

12. Toit pliant selon l'une quelconque des revendications 8 à 11,
**caractérisé en ce que**
la peau de toit (2) dans la zone arrière située entre l'arceau d'angle (7) et l'étrier (6) de tension de capote contient la vitre arrière (8) qui, lors de l'ouverture ou de la fermeture de la capote (1), est guidée selon une trajectoire définie par la barre d'écartement (13) et le groupe de basculement et de levage (S ; E) de l'étrier (6) de tension de capote.

13. Toit pliant selon l'une des revendications 11 ou 12,
**caractérisé en ce que**
l'étrier de tension de capote (6) présente à une certaine distance de sa branche de soutien (20) au moins deux barres de tension (23, 25) orientées selon la direction longitudinale du véhicule, et dont la barre (25) située en avant en position de fermeture, est reliée au groupe de tringlerie rabattable (5).

14. Toit pliant selon la revendication 13,
**caractérisé en ce que**
la vitre arrière (8) est articulée à la barre de tension (23) située en arrière, par l'intermédiaire d'un levier coudé (25).

15. Toit pliant selon la revendication 13 ou 14,
**caractérisé en ce qu'**
entre les deux barres de tension (23, 25) est prévu un vérin hydraulique servant d'organe d'entraînement (22) indépendant de l'organe d'entraînement principal (9).

16. Toit pliant selon l'une quelconque des revendications 1 à 14,
**caractérisé en ce que**
la barre d'écartement (13) et/ou l'étrier de tension de capote (6) est/sont en appui sur un palier principal de basculement (10) par l'intermédiaire d'un ressort à gaz sous pression (27).
